# EUROPÄISCHE PATENTSCHRIFT

(11) **EP 2 743 549 B1**
(45) Veröffentlichungstag und Bekanntmachung des Hinweises auf die Patenterteilung: **11.02.2015**
(21) Anmeldenummer: 12196720.2
(22) Anmeldetag: 12.12.2012
(51) Int. Cl.: F16K 3/00, F16K 31/06

(54) **Schieberventil**
Gate valve
Soupape à tiroir

(43) Veröffentlichungstag der Anmeldung: 18.06.2014
(73) Patentinhaber: HAWE Hydraulik SE, 81673 München (DE)
(72) Erfinder: Ascherl, Martin, 82140 Olching (DE); Burmeister, Daniel, 80639 München (DE)
(74) Vertreter: Grünecker, Kinkeldey, Stockmair & Schwanhäusser

(56) Entgegenhaltungen:
- DE-A1- 10 325 070
- FR-A1- 2 563 890
- JP-A- S58 175 717
- US-A- 4 574 843

## Beschreibung

Die Erfindung betrifft ein Schieberventil der im Oberbegriff des Patentanspruchs 1 angegebenen Art.

Bei solchen Schieberventilen, beispielsweise in der Hochdruckhydraulik, Mobilhydraulik oder Staplerhydraulik, dient die schraubverstellbare Hubbegrenzungs-Einrichtung dazu, einen Hubweg einer innenliegenden Schieberkomponente zu begrenzen, um beispielsweise eine bestimmte maximale Menge an Druckmittel entsprechend einer bestimmten Geschwindigkeit vorzugeben bzw. zu ändern. Die Hand-Not-Einrichtung dient hingegen dazu, bei einem Kabelbruch oder Stromausfall, beispielsweise eine über das Schieberventil angehobene und gehaltene Last von Hand absenken zu können, gegebenenfalls mit einer vorbestimmten Geschwindigkeit.

Ferner sind Betätigungsmagneten für gattungsgemäße Schieberventile auf dem Markt, die außen zugänglich sowohl eine Hand-Not-Einrichtung als auch eine mittels eines Gewindestiftes schraubverstellbare Hubbegrenzungs-Einrichtung aufweisen. Bei diesen bekannten Schieberventilen ist der Gewindestift direkt in einer Gewindebohrung des Magnetrohr-Einsatzes verschraubbar und in der jeweils gewählten Einschraubstellung durch eine Kontermutter am Magnetrohr-Einsatz festgelegt. Im oder unterhalb des Magnetrohr-Einsatzes ist in axialer Verlängerung des Gewindestiftes das Betätigungsglied verschiebbar angeordnet, auf welches der Gewindestift ausgerichtet ist. Über den Gewindestift wird demzufolge sowohl die Hand-Not-Einrichtung betätigt als auch die Hubbegrenzung eingestellt, und zwar über die Einschraubtiefe des Gewindestiftes. Dies bedeutet jedoch, dass zur Nutzung der Hand-Not-Einrichtung zunächst die Kontermutter gelöst und ausreichend weit hochgeschraubt werden muss, ehe der Gewindestift beispielsweise über 7 mm in die Gewindebohrung des Einsatzes eingeschraubt wird und über das Betätigungsglied die Hand-Not-Funktion aktiviert. Die Nutzung der Hand-Not-Einrichtung ist nicht nur mühsam, sondern auch sehr zeitaufwändig. Dies ist ein schwerwiegender Nachteil, weil beispielsweise bis zum kontrollierten Absenken einer gehaltenen Last zu viel Zeit verstreicht. Ein weiterer Nachteil liegt darin, dass bei Nutzung der Hand-Not-Einrichtung durch Einschrauben des Gewindestiftes die vorher einer bestimmten Hubbegrenzung entsprechende Einschraubstellung des Gewindestiftes verloren ist, und das Schieberventil diesbezüglich wieder neu einjustiert werden muss, was zusätzlichen Zeitaufwand bedeutet. Bei dem bekannten Schieberventil ist zwar ein metrisches Standardgewinde am Gewindestift vorgesehen, damit der Hubweg bis zum Ansprechen der Hand-Not-Einrichtung keine unnötig hohe Anzahl Umdrehungen des Gewindestiftes bis zum Ansprechen der Hand-Not-Einrichtung erfordert. Andererseits ist mit dem Standardgewinde eine präzise und feinfühlige Einstellung der Hubbegrenzungs-Einrichtung wegen der relativ steilen Gewindesteigung schwierig.

Es sind magnetbetätigte Schieberventile bekannt, bei denen das Betätigungsglied der Hand-Not-Einrichtung entweder stets oder nach Abnehmen einer Kappe zur Nutzung der Hand-Not-Einrichtung zugänglich ist. Solche Schieberventile haben jedoch keine außen zugängliche Hubbegrenzungs-Einrichtung, so dass eine dauerhafte Ein- oder Verstellung der maximalen Menge nicht möglich ist, sondern dafür der Schieberventil-Grundkörper und/oder dessen Hydraulikkomponenten getauscht werden, um die gewünschte Maximalmenge nicht zu überschreiten.

Eine Nutzung der Hubbegrenzungs-Einrichtung ist beispielsweise erforderlich, wenn ein Endverbraucher für einen über das Schieberventil betriebenen Hydroverbraucher eine niedrigere Maximalgeschwindigkeit bei Nenndruck braucht, als sie durch die maximale Menge entsprechend der Spezifikation oder des Typs des Schieberventils festgelegt ist. In diesem Fall wird z.B. im Betrieb des Hydroverbrauchers der Gewindestift eingeschraubt und die vom Schieberventil gesteuerte Menge so allmählich reduziert, bis die maximal zulässige Geschwindigkeit erreicht wird, die einer bestimmten Einschraubstellung des Gewindestiftes entspricht.

Aus FR 2 563 890 A ist ein hydraulisches Mehrwege-Sitzventil mit einem mit einem Sitz zusammenwirkenden Schließkolben bekannt, der ein Pilot-Nadelventil enthält, dessen Ventilnadel mit einem Anker des Betätigungsmagneten fest verbunden ist. Der Anker ist im Ankerrohr gegen die Kraft einer das Pilot-Ventil geschlossen haltenden Druckfeder magnetisch verstellbar. Im Ankerrohr ist ein als Magnetkern dienender Einsatz fest verschraubt, der ein am freien Ende des Betätigungsmagneten axial vorstehendes Schraubende aufweist, auf dessen Außengewinde eine Sicherungsmutter verschraubt ist, die das Magnetgehäuse am Ankerrohr festlegt. Der Einsatz im Ankerrohr ist längsdurchbohrt und enthält eine abgedichtete und drehbare Schraubspindel, die sich bis in eine Innenkammer des Ankers erstreckt und dort ein verdicktes Ende trägt. Die Schraubspindel ist mit einem Außengewinde im Einsatz verschraubbar und weist am freien Ende eine Drehhandhabe auf. Die Schraubspindel mit dem verdickten Ende ist Teil einer Hand-Not-Betätigung des Sitzventils. Im Normalbetrieb hat die Schraubspindel weder Einfluss auf die durch die Druckfeder und magnetisch bewirkten Bewegungen des Ankers noch eine Begrenzung des Hubs des Ankers. Der Hub des Ankers wird entweder durch Anschlag am mit dem Ankerrohr fest verschraubten Einsatz oder durch die Druckfeder begrenzt. Sollte die Stromversorgung des Betätigungsmagneten ausfallen, wird die Schraubspindel an der Drehhandhabe so weit aus dem Einsatz herausgeschraubt, bis das verdickte Ende am Anker angreift und diesen zusammen mit der Ventilnadel des Pilot-Ventils bewegt, bis der Schließkolben aufgrund des Druckunterschiedes selbsttätig vom Sitz abhebt und die Strömungswege verbindet. Um nach Behebung der Stromstörung das Sitzventil wieder normal benutzen zu können, muss die Schraubspindel wieder über die volle Schraubtiefe eingeschraubt werden, um den Anker freizugeben.

Weiterer Stand der Technik ist enthalten in DE 103 25 070 A1, US 4 574 843 A und JP 58-175717 A.

Der Erfindung liegt die Aufgabe zugrunde, ein Schieberventil der eingangs genannten Art zu schaffen, bei dem sich die Hand-Not-Einrichtung rasch betätigen lässt, und bei einer Nutzung der Hand-Not-Einrichtung eine vorhergehend gewählte Hubbegrenzungs-Einstellung nicht verloren geht.

Die gestellte Aufgabe wird mit den Merkmalen des Patentanspruches 1 gelöst.

Da der Gewindestift in der Kappe verschraubbar ist und zum Freilegen eines Zugangs zum Betätigungsglied mit der Kappe vom Ankerrohr abnehmbar ist, um die Hand-Not-Einrichtung zu betätigen, geht die vorhergehend gewählte Hubbegrenzungs-Einstellung nicht verloren, da der Gewindestift seine Schraubeinstellung in der Kappe beibehält. Die Hand-Not-Einrichtung kann dann, wie üblich, entweder von Hand oder mittels eines Werkzeuges durch Einschieben des Betätigungsgliedes sofort betätigt werden, weil das Abnehmen der Kappe nur wenig Zeit erfordert. Bei Nutzen der Hubbegrenzungs-Einrichtung wird der Gewindestift in der Kappe verschraubt, die auch die gewählte Schraubeinstellung hält und Reaktionskräfte am Gewindestift in den Magnetrohreinsatz oder das Magnetrohr einleitet.

Zweckmäßig ist der Gewindestift in einer Gewindebohrung der Kappe angeordnet und in der jeweils gewählten, durch das erneute, ordnungsgemäße Anbringen der Kappe am Ankerrohr reproduzierbaren Einschraubstellung mit einer Kontermutter an der Kappe selbst festlegbar, so dass sich die gewählte Einschraubstellung nicht selbsttätig, beispielsweise unter betriebsbedingten Erschütterungen, verstellen kann.

Besonders günstig ist der Gewindestift mit einem Feingewinde in die Kappe geschraubt, so dass sich die Hubbegrenzung sehr feinfühlig einstellen lässt, beispielsweise so, dass mit zwei vollen Umdrehungen des Gewindestiftes die Hubbegrenzung um 1,0 mm geändert wird. Bei Nutzen der Hubbegrenzungs-Einrichtung spielt die erforderliche Zeit eine untergeordnete Rolle, weil es primär auf eine präzise und feinfühlige Änderung ankommt. Hingegen wird bei Nutzen der Hand-Not-Einrichtung keine Zeit mit Verschrauben des Gewindestiftes nur mit der Feingewinde-Steigung vergeudet, da der Gewindestift dann mit der Kappe entfernt ist.

Um die gewählte Einschraubstellung des Gewindestiftes mittels der Kontermutter korrekt fixieren zu können, ist es zweckmäßig, wenn die Kappe an ihrer freiliegenden Außenseite um die Gewindebohrung eine ebene Kontermutter-Anschlagfläche aufweist.

Ferner ist es günstig, wenn der Gewindestift einen ein Außengewinde tragenden Schaft und am innen in der Kappe liegenden Ende einen gegenüber dem Schaft dünneren Fortsatz aufweist. Der Durchmesser des Fortsatzes ist zweckmäßig auf die Bohrung im Einsatz im Ankerrohr abgestimmt, die beispielsweise wegen im Ankerrohr herrschenden Drucks aus dem Schieberventil so klein wie möglich bemessen wird. Hingegen kann der Schaft einen erheblich größeren Durchmesser aufweisen, was der Stabilität des Gewindestiftes zugute kommt, dessen Ende freiliegt und ansonsten leicht verbogen werden könnte.

Die Kappe kann mit dem im Ankerrohr festgelegten Einsatz verschraubt sein und dabei die zusätzliche Funktion erfüllen, einen abnehmbaren Spulenkörper auf dem Ankerrohr in einer bestimmten Position festzulegen.

Dabei ist es zweckmäßig, wenn die Kappe einen Innengewindeabschnitt aufweist, der sich nur über einen Bruchteil, vorzugsweise etwa 1/5 bis 1/6, der freien Innenhöhe der Kappe erstreckt. Die Erstreckung des Innengewindeabschnittes wird zweckmäßig nur so groß gewählt, dass ein sicherer Sitz der Kappe, beispielsweise zum Festlegen des Spulenkörpers und/oder Reproduzieren der gewählten Hubbegrenzungseinstellung, gewährleistet ist, dennoch die Kappe mit wenigen Umdrehungen schnell abgenommen werden kann, um die Hand-Not-Einrichtung benutzen zu können.

In einer zweckmäßigen Ausführungsform ist das Betätigungsglied pilzförmig ausgebildet, und mit einem das Betätigungsende bildenden dünnen Fußteil in der Bohrung des Einsatzes, vorzugsweise mittels eines O-Ringes abgedichtet, verschiebbar geführt, so dass der Pilzkopf zum Anker weist und eine relativ große Anschlagfläche zum Angriff am Anker oder zum Abfangen des Ankers bietet.

Der Betätigungsmagnet des Schieberventils kann ein Schwarz/Weiß-Magnet oder ein Proportional-Magnet sein, dessen Spulenkörper einen elektrischen Anschlussstecker aufweist. Der Anschlussstecker kann z.B. über die Kappe mit dem Spulenkörper in wählbaren Drehpositionen am Ankerrohr festgelegt werden, z.B. um den jeweiligen Einbaubedingungen des Schieberventils hinsichtlich der Verkabelung Rechnung zu tragen.

Ferner kann das Schieberventil von dem Betätigungsmagneten direkt betätigt werden oder druckvorgesteuert sein. Bei einer direkten Betätigung wirkt der Anker, beispielsweise über einen Stößel, auf einen Schieberkolben ein, während er im Falle einer Druckvorsteuerung ein Ventilglied der Druckvorsteuerung betätigt, das als Pilotsteuerung Bewegungen des Schieberkolbens steuert.

In den meisten Anwendungsfällen weist das Schieberventil zwei gegensinnig wirkende Betätigungsmagneten auf, wobei zumindest an einem Betätigungsmagneten die Hand-Not-Einrichtung und die Hubbegrenzungs-Einrichtung vorgesehen ist, zweckmäßig sogar an beiden Betätigungsmagneten.

Schließlich kann es zweckmäßig sein, wenn die Kappe und zumindest das Betätigungsglied aus nicht-magnetischem Werkstoff bestehen, damit diese nicht sich aus dem Magnetfluss im Betätigungsmagneten ergebenden Kräften unterliegen.

Ausführungsformen des Erfindungsgegenstandes werden anhand der Zeichnungen erläutert. Es zeigen:
- Fig. 1: eine Seitenansicht eines Teiles eines Schieberventils,
- Fig. 2: einen Axialschnitt des in Fig. 1 gezeigten Schieberventil-Teiles,
- Fig. 3: einen vergrößerten Axialschnitt entsprechend Fig. 2,
- Fig. 4: eine Perspektivdarstellung einer Kappe als Ausstattungsteil des Schieberventils der Fig. 1 bis 3, und
- Fig. 5: eine Schnittdarstellung einer Detailvariante.

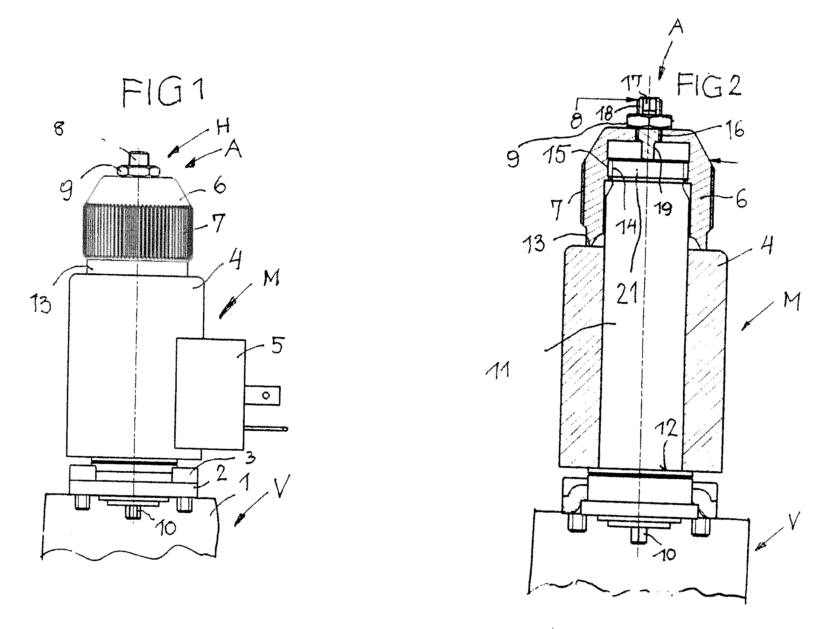

Die Fig. 1 bis 3 zeigen einen Teil eines Schieberventils V für die Hochdruckhydraulik (beispielsweise Mobilhydraulik oder Staplertechnologie), dessen nicht näher hervorgehobenen Hydraulikkomponenten, wie ein nicht gezeigter Schieberkolben, durch wenigstens einen Betätigungsmagneten M linear zwischen vorbestimmten Endstellungen verstellbar sind. Der Betätigungsmagnet M kann ein Schwarz/Weiß-Magnet oder ein Proportional-Magnet sein. Ein Schwarz/Weiß-Magnet erzeugt bestromt mit vorbestimmtem Kraftverlauf eine bestimmte Magnetkraft. Ein Proportional-Magnet erzeugt mit vorbestimmtem Kraftverlauf eine Magnetkraft, deren Wert von der Bestromung abhängt. Das Schieberventil V ist ein Mehrwege-Mehrstellungs-Schieberventil und steuert mit einstellbarer Menge pro Zeiteinheit, beispielsweise die Druckmittelbeaufschlagung eines Hydroverbrauchers, um diesen anzutreiben, wobei die Menge die Geschwindigkeit des Hydromotors bestimmt. Das Schieberventil V ist z.B. im Bereich des oberen Endes des Ankerrohres 11 mit einer Hand-Not-Einrichtung H und einer Hubbegrenzungs-Einrichtung A ausgestattet.

Der Betätigungsmagnet M ist mit einer Adapterplatte 2 am Ende eines Ventilschiebergehäuses 1 über Befestigungsschrauben 3 abnehmbar festgelegt und weist einen mit einer Kappe 6 auf einem Ankerrohr 11 positionierten, beispielsweise rohrförmigen Spulenkörper 4 auf, der einen elektrischen Anschlussstecker 5 besitzt, im gezeigten Fall an einer Seite des Spulenkörpers 4. Die Kappe 6 ist eine Schraubkappe mit einer außenseitigen Rändelung 7 und einem auf dem oberen Ende des Spulenkörpers 4 aufstehenden Fußteil 13.

Von der Hubbegrenzungs-Einrichtung A ist in Fig. 1 an der Kappe 6 ein Gewindestift 8 mit einer Kontermutter 9 erkennbar.

Gemäß Fig. 2 ist der Gewindestift 8 mit einem Außengewinde 18, vorzugsweise einem Feingewinde mit beispielsweise einem Hub von 1,0 mm bei zwei vollen Umdrehungen, in einer Gewindebohrung 16 der Kappe 6 verschraubbar angeordnet und in der jeweils gewählten Einschraubstellung in der Gewindebohrung 16 mittels der Kontermutter 9 fixiert. Der Gewindestift 8 weist am freien Ende eine Drehhandhabe 17, wie einen Innensechskant, auf, und beispielsweise am inneren, in der Kappe 6 liegenden Ende einen dünnen Stiftfortsatz 19, der zu einem in dem Ankerrohr 11 festgelegten und diesen verschließenden Einsatz 21 weist. Am Einsatz 21 ist ein Außengewinde 14 vorgesehen, auf welches die Kappe 6 mit einem Innengewindeabschnitt 15 so aufgeschraubt ist, dass der Fußteil 13 den Spulenkörper 4 auf einer Schulter 12 am unteren Ende des Ankerrohres 11 positioniert, und gegebenenfalls die Drehposition des Spulenkörpers 4 wählbar festlegt, und damit die Drehposition des elektrischen Anschlusssteckers 5.

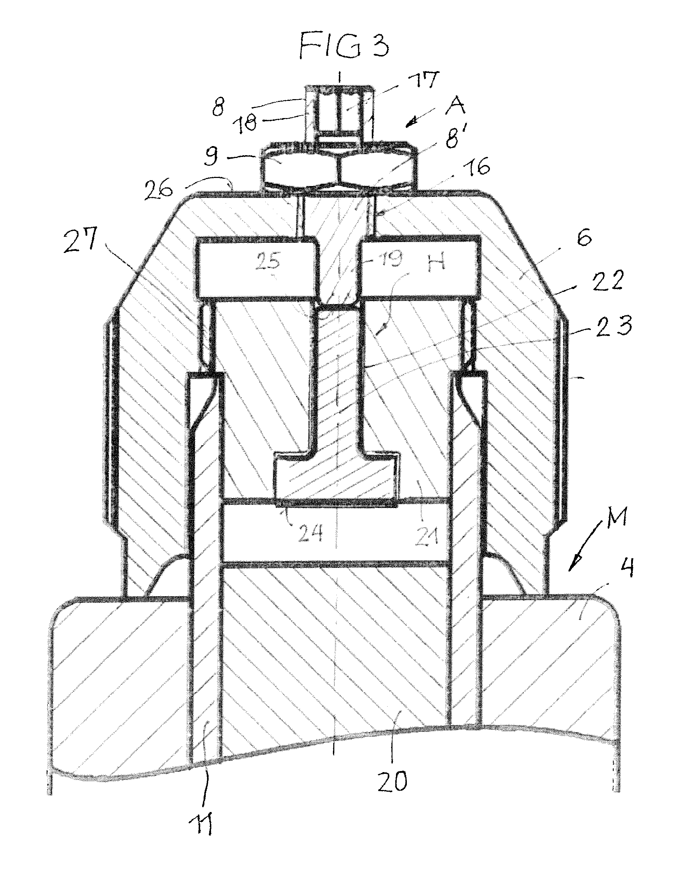

Fig. 2 verdeutlicht eine beispielsweise Einstellung der Hubbegrenzungs-Einrichtung A, in der ein in Fig. 2 nicht gezeigter Anker und mit diesem beispielsweise ein Kolbenschieber des Schieberventils V oder ein Ventilelement eines Vorsteuerventils für den Schieberventil V in einer vorbestimmten Position abgefangen werden, die bei fixierter Kappe 6 durch die Einschraubtiefe des Gewindestiftes 8 in die Gewindebohrung 16 der Kappe 6 bestimmt ist. Diese durch die Kontermutter 9 fixierte Einschraubstellung ist allein durch Aufschrauben der Kappe reproduzierbar, kann jedoch nach Lösen der Kontermutter 9 an der fixierten Kappe 6 geändert werden (Hubbegrenzungs-Einrichtung A). Im Detail wird hierzu auf Fig. 3 verwiesen, die die baulichen Gegebenheiten vergrößert und deutlicher darstellt.

In Fig. 3 verschließt der Einsatz 21 das obere Ende des Ankerrohres 11. Der Einsatz 21 ist z. B. eingepresst und festgelegt, und trägt bei 27 das in Fig. 2 angedeutete Außengewinde 14, auf das die Kappe 6 mit ihrem Innengewindeabschnitt 15 aufgeschraubt ist. Der Innengewindeabschnitt 15 hat im Übrigen eine axiale Erstreckung in der Kappe 6, die nur einem Bruchteil der inneren freien Höhe der Kappe 6 entspricht, z.B. 1/5 bis etwa 1/6 der inneren freien Höhe, so dass die Kappe 6 mit wenigen Drehungen ordnungsgemäß festlegbar aber auch rasch abnehmbar ist, wobei die Rändelung 7 das Anziehen und Abnehmen der Kappe 6 sogar mit der Hand ermöglichen kann.

Im Einsatz 21 ist zentrisch eine Bohrung 22 eingebracht, in der ein pilzförmiges Betätigungsglied 23 verschiebbar und beispielsweise über einen nicht gezeigten O-Ring abgedichtet geführt ist. Im unteren Ende der Bohrung 22 ist eine Erweiterung für den Pilzkopf des Betätigungsgliedes 23 vorgesehen, der mit einer Anschlagfläche 24 zu einem im Ankerrohr 11 verschiebbaren Anker 20 weist. Das Betätigungsglied 23 bildet am oberen Ende ein Betätigungsende 25, das mit dem Stiftfortsatz 19 des Gewindestiftes 8, wie gezeigt, zusammenwirkt, um mit der Anschlagfläche 24 eine vorbestimmte Anschlagposition für den Anker 20 zu definieren, an der dieser abgefangen wird, sobald er sich in Fig. 3 beispielsweise nach oben bewegt. Andererseits ist das Betätigungsende 25 als Teil der Hand-Not-Einrichtung H nutzbar, um nach Abnahme der Kappe 6, beispielsweise mit einem Werkzeug, das Betätigungsglied 23 nach unten zu verschieben, um bei einem Kabelbruch oder Stromausfall und nicht mehr funktionsfähigem Betätigungsmagneten M das Schieberventil mechanisch so zu betätigen, dass beispielsweise eine angehobene und gehaltene Last kontrolliert abgesenkt werden kann.

In Fig. 3 ist ferner angedeutet, dass das Außengewinde 18, d.h., falls vorgesehen, das Feingewinde, an einem relativ dicken Schaft 8' des Gewindestiftes 8 geformt ist, welcher Schaft 8' nicht nur gegen Verbiegen widerstandsfähig ist, sondern auch eine große Drehhandhabe 17 aufnehmen kann, während der Stiftfortsatz 19 einen deutlich kleineren Außendurchmesser hat, der geringfügig kleiner sein kann, als der Innendurchmesser der Bohrung 22, um in die Bohrung 22 eingreifen zu können.

Dieser Querschnittsverlauf des Gewindestiftes 8 entspricht ohne Beschränkung nur einer bevorzugten Ausführung.

In Fig. 3 kann das Betätigungsglied 23 nach Abnahme der Kappe 6 mit seiner Anschlagfläche 24 in etwa bündig mit dem unteren Ende des Einsatzes 21 sein, und muss zum Verstellen mit einem Werkzeug von oben angegriffen und das Betätigungsglied 23 nach unten gedrückt werden, um die Hand-Not-Einrichtung H zu nutzen.

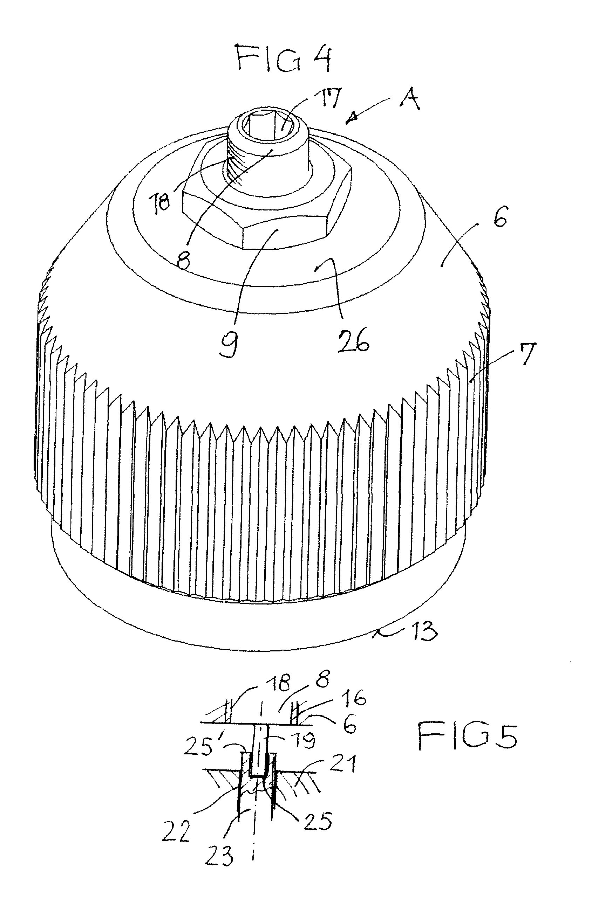

In der in Fig. 5 angedeuteten Variante steht hingegen das Betätigungsende 25' des Betätigungsgliedes 23 über die Oberseite des Einsatzes 21 über, während der Stiftfortsatz 19 in eine Vertiefung im Betätigungsende 25' eingreift und dort mit dem Grund 25 (Betätigungsende für die Hubbegrenzungs-Einrichtung A) zusammenwirkt. Nach Abnahme der Kappe kann am Betätigungsende 25' von Hand oder mit einem Werkzeug bequem angegriffen werden, um das Betätigungsglied 23 nach unten zu drücken (Hand-Not).

Fig. 4 zeigt die Kappe 6 der Fig. 3 perspektivisch und in vergrößertem Maßstab. An der freiliegenden Oberseite der Kappe 6, oberhalb der Rändelung 7, ist um die Gewindebohrung 16 eine ebene, hier z.B. kreisrunde Kontermutter-Anschlagfläche 26 geformt, gegen die die Kontermutter 9 auf dem Außengewinde 18 des Gewindestiftes 18 angezogen wird, um die gewählte Einschraubstellung des Gewindestiftes 8 zu fixieren. Die Kappe 6 könnte auch anders gestaltet sein, z.B. mit einem Sechskant oder dgl...

Alternativ zu den gezeigten Schraublösungen könnte die Kappe 6 mit einem Bajonettverschluss auf dem Einsatz 21 oder dem Ankerrohr 11 festgelegt sein. Zweckmäßig besteht zumindest die Kappe 6, und gegebenenfalls auch das Betätigungsglied 23, aus nicht-magnetischem Werkstoff. Die Kappe 6 ist gegebenenfalls ein Kunststoff-Formteil. Wie in den Fig. 2 und 3 gezeigt, enthält die Kappe 6 in aufgeschraubter Kondition oberhalb der Oberseite des Einsatzes 21 einen Freiraum, durch den sich der Stiftfortsatz 19 erstreckt. Dieser Freiraum könnte auch weniger tief als gezeigt sein oder vollständig wegfallen, um an der Kappe 6 Bauhöhe einzusparen. Schließlich zeigen die Fig. 1 und 2 an der Unterseite des Betätigungsmagneten M das Ende eines Stößels 10, der entweder den Kolbenschieber oder einen Anschlag des Schieberkolbens oder ein Ventilelement eines Vorsteuerventils betätigen kann, sobald der Betätigungsmagnet M bestromt wird und den Anker 20 verlagert (z.B. nach unten).

Die Hand-Not-Einrichtung H verlagert den gezeigten Anker 20 ebenfalls nach unten. Die in den Fig. 1 und 2 gezeigte Hubbegrenzungs-Einrichtung A begrenzt hingegen die Hubbewegung des Ankers des gegenüberliegenden oder gegensinnig arbeitenden zweiten Betätigungsmagneten.

## Patentansprüche

1. Schieberventil (V) mit wenigstens einem Betätigungsmagneten (M), wenigstens einer Hand-Not-Einrichtung (H), und wenigstens einer schraubverstellbaren Hubbegrenzungs-Einrichtung (A), die von außen zugänglich an einem Ankerrohr (11) des Betätigungsmagneten (M) angeordnet sind, wobei die Hubbegrenzungs-Einrichtung (A) einen relativ zum Ankerrohr (11) verschraubbaren Gewindestift (8) aufweist, und im Ankerrohr (11) ein mit dem Gewindestift (8) zusammenwirkendes, axial darauf ausgerichtetes Betätigungsglied (23) beweglich angeordnet ist, mit dem bei Nutzung sowohl der Hand-Not-Einrichtung (H) als auch der Hubbegrenzungs-Einrichtung (A) ein Anker (20) im Ankerrohr (11) beaufschlagbar oder in seinem Hubweg begrenzbar ist, und wobei am Ankerrohr (11) eine abnehmbare Kappe (6) vorgesehen ist und der Gewindestift (8) zur Hubbegrenzung am den Hub des Ankers (20) begrenzenden Betätigungsglied (23) zusammenwirkt, **dadurch gekennzeichnet, dass** der Gewindestift (8) der Hubbegrenzungs-Einrichtung (A) in der am Ankerrohr (11) angebrachten Kappe (6) zum Einstellen der Hubbegrenzung relativ zum Ankerrohr (11) verschraubbar und unter Beibehalt einer vorhergehend gewählten Hubbegrenzungs-Einstellung zum Freilegen eines Betätigungszugangs zum Betätigungsglied (23) der Hand-Not-Einrichtung (H) mit der Kappe (6) vom Ankerrohr (11) abnehmbar ist.

2. Schieberventil nach Anspruch 1, **dadurch gekennzeichnet, dass** der Gewindestift (8) mit einem Außengewinde (18) in einer Gewindebohrung (16) der Kappe (6) angeordnet und in der jeweils gewählten, durch Anbringen der Kappe (6) am Ankerrohr (11) reproduzierbaren Einschraubstellung mit einer Kontermutter (9) an der Kappe (6) festlegbar ist.

3. Schieberventil nach Anspruch 1, **dadurch gekennzeichnet, dass** der Gewindestift (8) ein Feingewinde (18) und, vorzugsweise, an einem an der Kappe (6) freiliegenden Ende eine Drehhandhabe (17), wie einen Innensechskant, aufweist.

4. Schieberventil nach Anspruch 2, **dadurch gekennzeichnet, dass** die Kappe (6) an ihrer freiliegenden Außenseite um die Gewindebohrung (16) eine ebene Kontermutter-Anschlagfläche (26) aufweist.

5. Schieberventil nach wenigstens einem der vorhergehenden Ansprüche, **dadurch gekennzeichnet, dass** der Gewindestift (8) einen das Außengewinde (18) tragenden Schaft (8') und am innen in der Kappe (6) liegenden Ende einen gegenüber dem Schaft (8') dünneren Stiftfortsatz (19) aufweist, dessen Außendurchmesser, vorzugsweise, kleiner ist als eine ein Betätigungsende (25) des Betätigungsgliedes (23) enthaltende Bohrung (22) in einem das Ankerrohr (11) verschließenden Einsatz (21).

6. Schieberventil nach Anspruch 5, **dadurch gekennzeichnet, dass** die Kappe (6) mit dem im Ankerrohr (11) festgelegten Einsatz (21) verschraubt ist und, vorzugsweise, einen abnehmbaren Spulenkörper (4) des Betätigungsmagneten (M) auf dem Ankerrohr (11) festlegt.

7. Schieberventil nach Anspruch 6, **dadurch gekennzeichnet, dass** die Kappe (6) zum Verschrauben mit dem Einsatz (21) einen Innengewindeabschnitt (15) aufweist, der sich nur über einen Bruchteil, vorzugsweise etwa 1/5 bis 1/6, der freien Innenhöhe der Kappe (6) erstreckt.

8. Schieberventil nach wenigstens einem der vorhergehenden Ansprüche, **dadurch gekennzeichnet, dass** das Betätigungsglied (23) pilzförmig ausgebildet ist, mit einem das Betätigungsende (25) bildenden Fußteil in der Bohrung (22) des Einsatzes (21), vorzugsweise abgedichtet, verschiebbar geführt ist, und mit einer Anschlagfläche (24) am Pilzkopf zum Anker (20) weist.

9. Schieberventil nach wenigstens einem der vorhergehenden Ansprüche, **dadurch gekennzeichnet, dass** der Betätigungsmagnet (M) ein Schwarz/Weiß-Magnet oder ein Proportional-magnet ist, dessen Spulenkörper (4) einen elektrischen Anschlussstecker (5) aufweist, der über die Kappe (6) mit dem Spulenkörper (4) in wählbaren Drehpositionen festlegbar ist.

10. Schieberventil nach wenigstens einem der vorhergehenden Ansprüche, **dadurch gekennzeichnet, dass** das Schieberventil (V) vom Betätigungsmagneten (M) direkt betätigbar oder druckvorgesteuert ist.

11. Schieberventil nach wenigstens einem der vorhergehenden Ansprüche, **dadurch gekennzeichnet, dass** das Schieberventil (V) zwei gegensinnig wirkenden Betätigungsmagneten (M) und die Hand-Not-Einrichtung (H) und die Hubbegrenzungs-Einrichtung (A) an zumindest einem der Betätigungsmagneten (M) aufweist.

12. Schieberventil nach wenigstens einem der vorhergehenden Ansprüche, **dadurch gekennzeichnet, dass** die Kappe (6) und zumindest das Betätigungsglied (23) aus nicht-magnetischem Werkstoff bestehen.

## Claims

1. Slider valve (V) comprising at least one actuating magnet (M), at least one hand-emergency-assembly (H), and at least one stroke limiting assembly (A) is accessible from the outside at an armature tube (11) of the actuating magnet (M), which stroke limiting assembly (A) is adjustable by threading and wherein the stroke limiting-assembly (A) comprises a threaded pin (8) which can be threaded relative to the armature tube (11), and wherein for cooperation with the threaded pin (8) and in alignment with the threaded pin (8) an actuating member (23) is movably arranged in the armature tube (11), by means of which actuating member (23) in case of utilization of both as well the hand-emergency-assembly (H) as also the stroke limiting-assembly (A) an armature (20) arranged in the armature tube (11) can be actuated or can be limited in its stroke path, and wherein a removable cap (6) is provided at the armature tube (11) and the threaded pin (8) is co-acting with the actuating member (23) for limiting the stroke of the armature (20), **characterized in that** for adjusting the stroke limit relative to the armature tube (11) the threaded pin (8) of the stroke-limiting-assembly (A) can be threaded in the cap (6) provided at the armature tube (11) and can be removed together with the cap (6) from the armature tube (11) for clearing an actuation access of the actuating member (23) of the hand-emergency-assembly (H) while maintaining the prior selected and adjusted stroke limit.

2. Slider valve according to claim 1, **characterized in that** the threaded pin (8) is arranged with an exterior thread (18) in a threaded bore (16) of the cap (6) and is secured at the cap (6) by a counter nut (9) in the respective selected threaded position which is reproducible by mounting the cap (6) at the armature tube (11).

3. Slider valve according to claim 1, **characterized in that** the threaded pin (8) has a fine pitch thread and, preferably, at an end freely protruding from the cap (6) a turning handle (17) like an internal hexagon.

4. Slider valve according to claim 2, **characterized in that** the cap (6) has a planar counter nut abutment surface (26) surrounding the threaded bore (16) at the free outer cap side.

5. Slider valve according to at least one of the preceding claims, **characterized in that** the threaded pin (8) has a shaft (8') carrying the exterior thread (18) and at its end situated in the interior of the cap (6) a pin projection (19) which is thinner than the shaft (8'), the outer diameter of the pin projection (19), preferably, being smaller than a bore (22) in an insert (21) closing the armature tube (11) and accommodating an actuation end (25) of the actuating member (23).

6. Slider valve according to claim 5, **characterized in that** the cap (6) is in threaded connection with the insert (21) secured in the armature tube (11), and, preferably, fixes a removable coil body (4) of the actuating magnet (M) on the armature tube (11).

7. Slider valve according to claim 6, **characterized in that** the cap (6) has an interior threaded section (15) for threaded connection with the insert (21), which interior threaded section (15) extends only over a fraction of the free inner height of the cap (6), preferably over about 1/5 to 1/6.

8. Slider valve according to at least one of the preceding claims, **characterized in that** the actuating member (23) has the shape of a mushroom, is slidably guided in the bore (22) of the insert (21), preferably in sealed fashion, with a mushroom foot part defining the actuation end (25), and faces with an abutment surface (24) at the mushroom head towards the armature (20).

9. Slider valve according to at least one of the preceding claims, **characterized in that** the actuating magnet (M) is a black/white-magnet or a proportional magnet, the coil body (4) of which has an electric connection terminal (5) which can be fixed by means of the cap (6) and with the coil body (4) in selectable rotary positions.

10. Slider valve according to at least one of the preceding claims, **characterized in that** the slider valve (V) either is actuated directly by the actuating magnet (M) or is pilot pressure controlled.

11. Slider valve according to at least one of the preceding claims, **characterized in that** the slider valve (V) comprises two counteracting actuating magnets (M), and that the hand-emergency-assembly (H) and the stroke-limiting-assembly (A) are arranged at at least one of the actuating magnets (M).

12. Slider valve according to at least one of the preceding claims, **characterized in that** the cap (6) and at least the actuating member (23) are made from non-magnetic material.

## Revendications

1. Vanne à guillotine (V) avec au moins un aimant d'actionnement (M), au moins un dispositif d'urgence manuel (H) et au moins un dispositif de limitation de course (A) à réglage par vis, qui sont agencés avec un accès depuis l'extérieur sur un tube d'induit (11) de l'aimant d'actionnement (M), dans laquelle le dispositif de limitation de course (A) comporte une vis de réglage (8) vissable sur le tube d'induit (11), et dans laquelle est agencé un élément d'actionnement (23) interagissant avec la vis de réglage (8) de façon mobile dans le tube d'induit (11) et aligné axialement par rapport à celui-ci, qui permet d'actionner un induit (20) dans le tube d'induit (11) ou de limiter sa course lors de l'utilisation aussi bien du dispositif d'urgence manuel (H) que du dispositif de limitation de course (A), et dans laquelle un couvercle (6) amovible est pourvu sur le tube d'induit (11) et la vis de réglage (8) interagit pour la limitation de course sur l'élément d'actionnement (23) qui limite la course de l'induit (20), **caractérisée en ce que** la vis de réglage (8) du dispositif de limitation de course (A) se visse dans le couvercle (6) agencé sur le tube d'induit (11) pour régler la limitation de course par rapport au tube d'induit (11), et **en ce que** le dispositif d'urgence manuel (H) peut être enlevé avec le couvercle (6) du tube d'induit (11) pour libérer un accès d'actionnement à l'élément d'actionnement (23) tout en maintenant un réglage de limitation de course présélectionné.

2. Vanne à guillotine selon la revendication 1, **caractérisée en ce que** la vis de réglage (8) est agencée avec un filetage externe (18) dans un trou fileté (16) du couvercle (6) et peut être réglée dans la position de vissage reproductible respective choisie en plaçant le couvercle (6) sur le tube d'induit (11) avec un contre-écrou (9) sur le couvercle (6).

3. Vanne à guillotine selon la revendication 1, **caractérisée en ce que** la vis de réglage (8) comporte un filetage fin (18) et préférablement un moyen d'actionnement rotatif (17) à l'extrémité libre du couvercle (6), tel qu'une tête à six pans creux.

4. Vanne à guillotine selon la revendication 2, **caractérisée en ce que** le couvercle (6) comporte une surface de butée de contre-écrou (26) plane autour du trou fileté (16) sur son côté externe libre.

5. Vanne à guillotine selon au moins l'une des revendications précédentes, **caractérisée en ce que** la vis de réglage (8) comporte un axe (8') portant le filetage externe (18) et, à son extrémité située dans le couvercle (6) en face de l'axe (8'), une tige d'extension (19) plus fine dont le diamètre extérieur est préférablement inférieur à celui d'un perçage (22) contenant une extrémité d'actionnement (25) de l'élément d'actionnement (23) dans un insert (21) fermant le tube d'induit (11).

6. Vanne à guillotine selon la revendication 5, **caractérisée en ce que** le couvercle (6) est vissé à l'insert (21) fixé dans le tube d'induit (11) et fixe préférablement un corps de bobine (4) amovible de l'aimant d'actionnement (M) sur le tube d'induit (11).

7. Vanne à guillotine selon la revendication 6, **caractérisée en ce que** le couvercle (6) comporte pour le vissage à l'insert (21) une section à filetage interne (15) qui ne s'étend que sur une fraction, préférablement sur environ 1/5 à 1/6, de la hauteur interne libre du couvercle (6).

8. Vanne à guillotine selon au moins l'une des revendications précédentes, **caractérisée en ce que** l'élément d'actionnement (23) présente une forme de champignon, **en ce qu'**il est guidé avec une partie de pied constituant l'extrémité d'actionnement (25) de façon coulissante, préférablement étanche, dans le perçage (22) de l'insert (21), et **en ce qu'**il comporte sur la tête du champignon une surface de butée (24) contre l'induit (20).

9. Vanne à guillotine selon au moins l'une des revendications précédentes, **caractérisée en ce que** l'aimant d'actionnement (M) est un aimant tout ou rien ou un électro-aimant proportionnel dont le corps de bobine (4) comporte une fiche de connexion électrique (5) qui peut être fixée avec le corps de bobine (4) dans des positions de rotation sélectionnables via le couvercle (6).

10. Vanne à guillotine selon au moins l'une des revendications précédentes, **caractérisée en ce que** la vanne à guillotine (V) peut être commandée directement par l'aimant d'actionnement (M) ou par régulation en fonction de la pression.

11. Vanne à guillotine selon au moins l'une des revendications précédentes, **caractérisée en ce que** la vanne à guillotine (V) comporte deux aimants d'actionnement (M) à actionnement opposé et comporte le dispositif d'urgence manuel (H) et le dispositif de limitation de course (A) sur au moins un des aimants d'actionnement (M).

12. Vanne à guillotine selon au moins l'une des revendications précédentes, **caractérisée en ce que** le couvercle (6) et au moins l'élément d'actionnement (23) sont constitués d'un matériau non magnétique.
